# DEMANDE DE BREVET EUROPEEN

(11) **EP 0 764 420 A1**
(43) Date de publication de la demande: **26.03.1997**
(21) Numéro de dépôt: 96460025.8
(22) Date de dépôt: 08.07.1996
(51) Int. Cl.: A47J 37/01, A21B 3/13

(54) **Container destiné à recevoir des produits alimentaires en vue de leur cuisson et procédé de conditionnement de produits alimentaires dans un tel container**

(30) Priorité: 25.09.1995 FR 9511420
(71) Demandeur: EUROPLASTIQUES S.A., 53007 Laval Cédex (FR)
(72) Inventeur: Michel, Guy, 53007 Laval Cedex (FR)
(74) Mandataire: Maillet, Alain

(57) **Abrégé**

La présente invention concerne un container destiné à recevoir des produits alimentaires en vue de leur cuisson, ainsi qu'un procédé de conditionnement de produits alimentaires dans un tel container.

Le container (10, 110) selon l'invention est constitué d'un récipient (10', 110') comprenant au moins une paroi latérale (11, 111) et un fond (12, 112) et d'un moyen de protection (30, 130) de la face externe dudit récipient (10', 110') vis-à-vis des projections issues desdits produits (20, 120) lors de la cuisson, ledit moyen (30, 130) étant monté amovible sur ledit récipient (10', 110')

Il est caractérisé en ce que ledit moyen (30, 130) est constitué d'un film souple en matière plastique dont une partie recouvre la face externe (11a, 111a) de ladite ou chaque paroi latérale (11, 111) dudit récipient (10, 110).

L'invention s'applique notamment à un container comportant un fond et une ou plusieurs parois latérales, sur la surface desquelles la cuisson du produit alimentaire qu'il est destiné à recevoir est susceptible de donner lieu à une quantité importante de salissures.

## Description

La présente invention concerne un container destiné à recevoir des produits alimentaires en vue de leur cuisson, ainsi qu'un procédé de conditionnement de produits alimentaires dans un container en vue de leur cuisson. L'invention s'applique notamment à un container comportant un fond et une ou plusieurs parois latérales, sur la surface desquelles la cuisson du produit alimentaire qu'il est destiné à recevoir est susceptible de donner lieu à une quantité importante de salissures.

Les industriels des métiers de l'agroalimentaire qui utilisent de tels containers pour procéder à la cuisson de produits tels que des pâtés disposent souvent, après cuisson, de containers présentant de très nombreuses coulures de graisse, taches d'huile, ou autres salissures le long de leurs parois latérales. Or, ils se doivent d'offrir à la vente des produits logés dans des containers exempts de toute souillure. Actuellement, diverses possibilités se présentent à eux, consécutivement à la cuisson:

Ils peuvent opter pour un nettoyage manuel du container au moyen d'une éponge ou de tout chiffon approprié. Cette solution présente l'inconvénient d'augmenter le coût en main d'oeuvre pour l'industriel et les risques de contamination du produit pour le consommateur, les taches provoquées par la cuisson de certains pâtés étant très résistantes.

Ils peuvent également opter pour un nettoyage automatique du container. Ce dernier est alors soumis en position renversée à une douche d'eau chaude sous pression, éventuellement additionnée d'un agent mouillant ou détersif. Cette pratique présente de graves inconvénients liés au retournement du container, qui peut provoquer une altération du produit.

Ils pourraient aussi choisir de limiter l'utilisation du container souillé à la cuisson seule, et d'utiliser un second container pour la mise en vente du produit. Cette solution présente l'inconvénient d'augmenter de manière substantielle les risques de contamination du produit lors de son démoulage du container réservé à la cuisson. De plus, chaque container de cuisson doit être régulièrement nettoyé et renouvelé, ce qui engendre des coûts supplémentaires en main d'oeuvre et en matériel.

Les industriels peuvent enfin utiliser un moyen de protection de la paroi latérale du container vis-à-vis des salissures, qui est prévu pour être disposé de manière amovible autour du container, prélablement à l'introduction de celui-ci dans le four.

Un tel moyen de protection peut par exemple être constitué d'une paroi annulaire prolongeant vers le haut le rebord périphérique dudit container. On pourra par exemple se reporter au document de brevet américain US-A-1 832 117 pour la description détaillée d'un tel moyen. Il est également connu d'utiliser un corps annulaire en forme de gouttière, destiné à supporter par son bord interne le rebord du container et prévu pour recevoir les coulures et projections lors de la cuisson (voir par exemple le document de brevet américain US-A-2 501 799).

Un inconvénient majeur des moyens de protection précités est qu'ils s'avèrent insuffisants lors de coulures ou projections considérables, ces dernières étant alors susceptibles de s'infiltrer entre le rebord du container et la paroi ou la gouttière entourant ledit rebord, ce qui oblige à nettoyer en machine ledit container.

Le but de la présente invention est de proposer un container destiné à recevoir des produits alimentaires en vue de leur cuisson, qui soit, d'une part, constitué d'un récipient comprenant au moins une paroi latérale et un fond et d'un moyen amovible de protection de la paroi externe dudit récipient vis-à-vis des projections et des coulures issues desdits produits lors de la cuisson et qui, d'autre part, protège efficacement la ou les parois latérales du container quelque abondantes que soient lesdites projections ou coulures.

A cet effet, ledit moyen de protection est constitué d'un film souple en matière plastique dont une partie recouvre la face externe de ladite ou chaque paroi latérale dudit récipient.

Il en découle que ledit moyen de protection est adaptable à toutes les géométries de containers.

Selon une première variante de réalisation, l'une des faces dudit moyen de protection adhère à l'autre face, ou bien l'une des extrémités dudit moyen de protection est solidaire de son autre extrémité par soudage à chaud.

Préférentiellement, ledit moyen de protection déborde sur le rebord de ladite ou desdites parois latérales et/ou sur ledit fond.

Le contact entre ledit moyen de protection et le récipient est ainsi amélioré.

Selon une seconde variante de réalisation, ledit film souple est collé sur le rebord de ladite ou desdites parois latérales, de manière à rendre étanche auxdites projections l'espace compris entre ladite partie du film et ladite ou chaque paroi latérale que ladite partie recouvre.

Avantageusement, ledit film souple recouvre le fond dudit récipient, de manière à rendre étanche l'espace compris entre, d'une part, ledit film et, d'autre part, ladite ou chaque paroi latérale et ledit fond.

Le fond du récipient est ainsi protégé vis-à-vis des coulures et des résidus de produits présents sur le support de cuisson.

Avantageusement, ledit film comporte des moyens de pelage dudit container.

Ledit récipient peut ainsi être présenté sans tache à la vente.

Préférentiellement, lesdits moyens de pelage sont solidaires dudit rebord et sont respectivement prévus pour être rabattus sur ladite partie du film recouvrant la ou chaque paroi latérale.

Il en résulte que le pelage du container s'effectue commodément et en un minimum de temps.

Avantageusement, lesdits moyens de pelage sont collés sur ladite partie du film recouvrant ladite ou chaque paroi latérale.

Par conséquent, ils ne risquent pas d'entrer en contact avec le produit alimentaire lorsque celui-ci est placé dans le container.

Selon une autre caractéristique de l'invention, le film souple est rétractable à chaud.

Le contact entre le film et la paroi externe du récipient peut ainsi être amélioré préalablement à la cuisson.

De préférence, le film et le récipient sont respectivement constitués de matériaux chimiquement compatibles entre eux, tels que le polyéthylène et le polypropylène.

L'opération de collage à chaud pourra ainsi s'effectuer dans de bonnes conditions, de sorte à assurer, d'une part, l'étanchéité entre le récipient et le film et, d'autre part, le pelage du container.

Le procédé de conditionnement de produits alimentaires dans un container en vue de leur cuisson est tel qu'il consiste à utiliser le container selon ladite première variante de réalisation.

Selon un autre mode de réalisation, ledit procédé consiste à utiliser un récipient comportant une ou plusieurs parois latérales, un fond et un rebord, à envelopper d'un film souple ledit récipient, les matériaux constituant respectivement ledit récipient et ledit film étant chimiquement compatibles entre eux, à tendre ledit film autour du récipient de telle sorte qu'il soit plaqué étroitement sur ledit rebord, à envoyer de l'air chaud sur la partie du film qui recouvre ledit rebord de façon à coller sans apport de matière ladite partie sur ledit rebord, et à pratiquer plusieurs incisions sur la partie du film qui recouvre la face d'ouverture du récipient, de manière à obtenir plusieurs moyens de pelage du container qui sont solidaires dudit rebord et qui sont prévus être rabattus sur la partie du film qui recouvre la ou chaque paroi latérale du récipient.

Ce procédé est peu coûteux à mettre en oeuvre du fait de la masse négligeable dudit film, les frais de nettoyage consécutifs à la cuisson étant supprimés et le coût pour l'évacuation des déchets étant réduit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue en coupe d'un container selon un premier mode de réalisation de l'invention,
la Fig. 2 est une vue en coupe d'un container selon un second mode de réalisation de l'invention,
la Fig. 3 est une vue en coupe du container de la Fig. 2 lors de la première étape de sa fabrication, et
la Fig. 4 est une vue en coupe du container de la Fig. 2 lors de la seconde étape de sa fabrication.

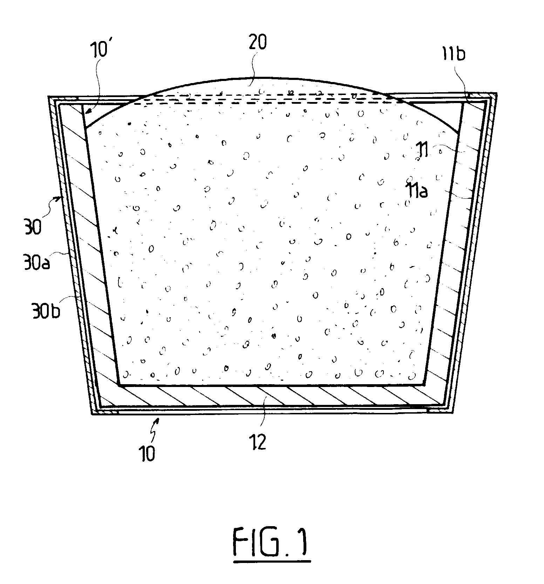

Le container 10 représenté à la Fig. 1 est rempli du produit alimentaire 20 qu'il est destiné à recevoir. Il est constitué d'un récipient 10' comportant au moins une paroi latérale 11, un fond 12 et d'un moyen de protection 30 de la face externe 11a, 12a dudit récipient 10' vis-à-vis des projections intervenant lors de la cuisson dudit produit 20. Ledit moyen de protection 30 est constitué d'une bande souple qui est en contact étroit avec la face externe 11a de ladite ou desdites parois latérales 11. Cette bande souple 30 est conçue pour pouvoir recouvrir ladite face externe 11a sur tout son pourtour, et elle déborde de préférence légèrement sur le rebord 11b de la ou des parois latérales 11 ainsi que sur le fond 12.

Le container 10, qui correspond au premier mode de réalisation de l'invention, est obtenu de la manière suivante. On utilise une bande souple 30 dont la longueur est supérieure au pourtour extérieur maximal du récipient 10'. Puis on enroule ladite bande souple 30 sur la face externe 11a de la ou des parois latérales 11, en exerçant simultanément une traction sur ladite bande 30, très étirable à froid, dans le sens de sa longueur, de manière à ce qu'elle enveloppe étroitement le récipient 10'. Le pourtour dudit récipient 10' ayant été intégralement recouvert par la bande 30, on applique la portion restante de cette dernière sur la partie de la bande 30 initialement enroulée autour du récipient 10'. La bande 30 est ainsi maintenue durablement en contact étroit avec le récipient 10', par simple adhérence de l'une de ses faces 30a ou 30b à l'autre face 30b ou 30a. Pour ce faire, ladite bande 30 est réalisée en matériau polymère.

On notera que la bande souple 30 pourrait être mise en contact étroit avec le récipient 10' par simple soudage à chaud de ses deux extrémités l'une sur l'autre, suivi d'une rétraction par apport de chaleur.

Par ailleurs et à titre indicatif, la bande 30 peut supporter facilement des températures de l'ordre de 110°C en milieu gras et humide, et ce pendant trois heures. A la fin de la cuisson, on retire la bande 30 de la paroi latérale 11 du récipient 10', par décollement de la portion de bande 30 adhérant à elle-même suivie d'un déroulement de la bande 30 à partir de ladite portion. On peut également se servir d'un outil coupant approprié. La bande 30, souillée de projections d'huile ou de coulures de graisses par exemple, peut être jetée.

On comprendra que le moyen de protection 30 selon l'invention pourrait également être constitué d'une pluralité de bandes souples fixées sur la ou les parois latérales 11 du récipient 10'.

Lors de la cuisson du produit alimentaire 20, il s'avère que les coulures et les projections émises par ledit produit 20 sont uniquement localisées sur la face externe de la bande souple 30. Par conséquent, la ou les parois latérales 11 du récipient 10' ne sont pas tachées et celui-ci peut être présenté à la vente tel quel.

On notera que le contact entre la bande 30 et le récipient 10' est suffisant pour protéger efficacement ledit récipient 10', lors de la cuisson de produits tels que des mousses.

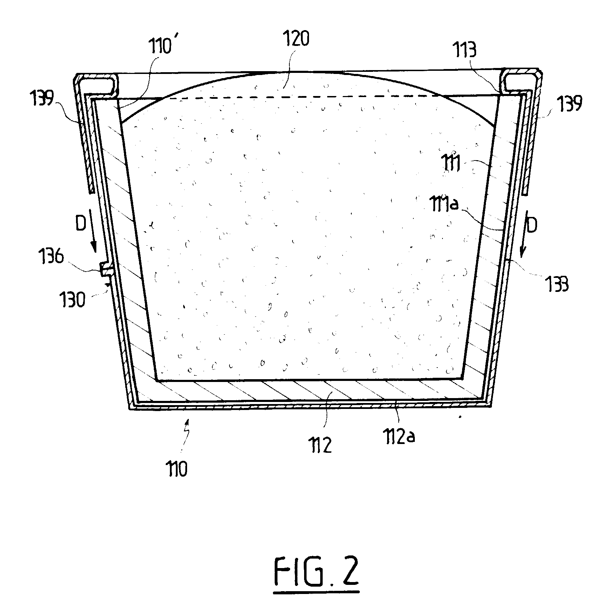

Le container 110 représenté à la Fig. 2 constitue un second exemple de réalisation de l'invention. Il est constitué d'un récipient 110' comportant au moins une paroi latérale 111, un fond 112 et un moyen de protection 130 de la face externe 111a, 112a dudit récipient 110' vis-à-vis des projections intervenant lors de la cuisson du produit 120 qu'il est destiné à recevoir. Ledit moyen de protection 130 est constitué d'un film souple qui est plaqué étroitement sur le rebord 113 de ladite ou desdites parois latérales 111 et qui recouvre les faces externes respectives 111a et 112a de ladite ou desdites parois latérales 111 et dudit fond 112.

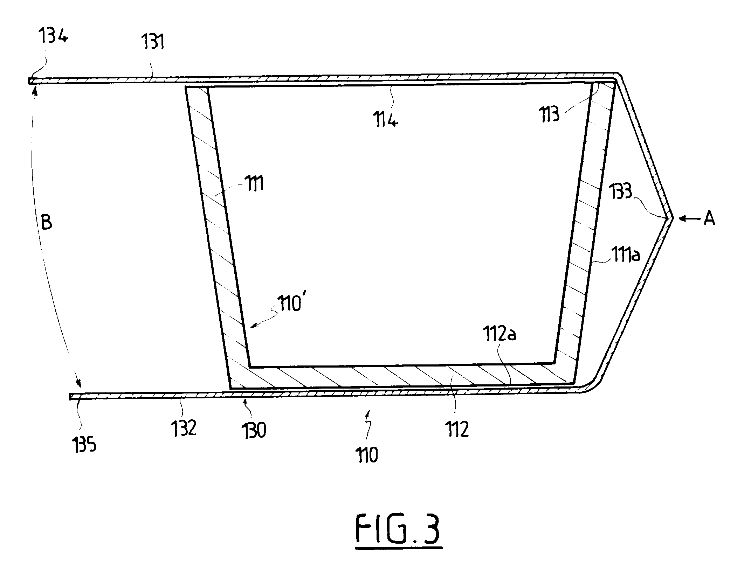

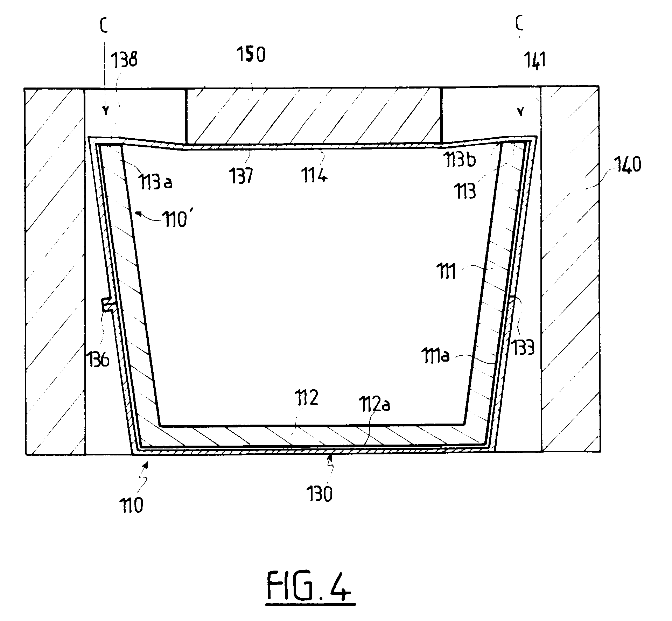

Le container 110 est obtenu de la manière illustrée aux Figs. 3 et 4.

Comme on peut le voir à la Fig. 3, le film souple 130 utilisé est du type qui est plié en deux volets 131 et 132 sensiblement égaux qui sont situés de part et d'autre d'un pli central 133. Ses dimensions sont telles que l'un des volets 131 se trouvant d'un côté du pli 133 puisse recouvrir la face d'ouverture 144 du récipient 110' et sensiblement la moitié de la ou de chaque paroi latérale 111 adjacente à ladite face d'ouverture 114. Quant à l'autre volet 132 du film 130, il est prévu pour recouvrir le fond 112 et sensiblement l'autre moitié de la ou de chaque paroi latérale 111 adjacente audit fond 112.

On applique le film 130 sur la face externe 114, 111a, 112a du récipient 110', d'une part, en disposant le pli 133 contre l'une au moins des parois latérales 111 dudit récipient 110' (voir flèche A) et, d'autre part, en rapprochant l'une de l'autre (voir flèche B) et sur la ou chaque paroi latérale 111 du récipient 110' les extrémités 134 et 135 des volets 131 et 132 respectivement adjacentes à la face d'ouverture 114 et au fond 112 dudit récipient 110' (ces extrémités 134 et 135 ne sont représentées que d'un seul côté du récipient 110' à la Fig. 3). Puis on effectue un soudage à chaud desdites deux extrémités 134 et 135 sur ladite ou chaque paroi latérale 111, de manière que le film 130 recouvre la totalité du récipient 110'. On a représenté aux Figs. 2 et 4 la ligne de soudure 136 entre lesdites extrémités 134 et 135.

On envoie ensuite de l'air chaud sur le récipient 110' recouvert du film 130 thermorétractable, de manière à faire adhérer ledit film 130 à la paroi externe dudit récipient 110'.

Comme on peut le voir à la Fig. 4, on dispose ensuite un premier cache 140 autour du container 110, et éventuellement un second cache 150 sur la partie 137 du film 130 qui recouvre la face d'ouverture 114 du récipient 110'. Ledit premier cache 140 est prévu pour que sa périphérie interne 141 puisse entourer de près le bord externe 113a dudit rebord 113. Ledit second cache 150 est prévu pour servir de moyen de pression sur ladite partie 137, seulement pour le cas où la tension du film 130 résultant de sa rétraction à chaud serait insuffisante.

Dans cette dernière hypothèse, en même temps que l'on exerce une pression sur ladite partie 137 par l'intermédiaire du cache 150, de manière à la tendre fortement et à plaquer la partie 138 non cachée du film 130 qui recouvre le rebord 113 du récipient 110' sur ledit rebord 113, on envoie de l'air chaud sur ladite partie 138 (voir flèches C), de manière à coller cette dernière sans apport de matière sur ledit rebord 113. Quant au reste du film 130, il n'est pas collé sur le récipient 110' grâce aux caches 140 et 150 utilisés.

D'une manière générale, les matériaux respectivement utilisés pour le récipient 110' et pour le film 130 doivent être chimiquement compatibles entre eux, de manière à pouvoir, d'une part, être collés l'un sur l'autre par apport de chaleur et sans apport de matière et, d'autre part, être détachés l'un de l'autre sans avoir à fournir un effort trop important. Comme cela apparaît dans cet exemple de réalisation, l'association polypropylène - polyéthylène remplit ces deux conditions.

On pratique ensuite plusieurs incisions sur la partie 137 du film 130 située à l'intérieur du bord interne 113b du rebord 113, de sorte à libérer la face d'ouverture 114 du récipient 110' en formant plusieurs moyens de pelage 139 respectivement solidaires de la périphérie ou des arêtes du rebord 113 (voir les deux moyens de pelage 139 respectivement représentés pour deux des arêtes 113 du récipient 110', à la Fig. 2). Chaque moyen de pelage 139 est prévu pour être rabattu, par rapport audit rebord 113 (dans le cas d'une face d'ouverture circulaire) ou par rapport à l'arête de laquelle il est solidaire, sur la partie de film 130 recouvrant la ou chaque paroi latérale 111 du récipient 110'.

Par exemple, dans le cas d'un récipient 110' dont la face d'ouverture 114 serait assimilable à un rectangle, lesdits moyens de pelage 139 seront avantageusement obtenus par deux incisions de ladite partie 137 du film 130 qui correspondent respectivement aux diagonales de ladite face d'ouverture 114, de manière à obtenir quatre moyens 139 respectivement solidaires des arêtes 113 de ladite face 114, sur lesquelles ils sont collés.

De préférence, chaque moyen de pelage 139 ayant été rabattu sur la ou chaque paroi latérale 111 du container 110, on colle ensuite lesdits moyens 139 sur ledit container 110 par l'intermédiaire d'une colle adaptée au conditionnement alimentaire. Le container 110 peut alors être utilisé par l'industriel agroalimentaire pour recevoir le produit alimentaire 120 devant être cuit, sans que ce dernier ne puisse entrer en contact avec le film 130.

On remarquera que lors de la cuisson, le film 130 étant collé sur le rebord 113 du récipient 110', les projections d'huile ou les coulures de graisse ne peuvent pas s'inflitrer entre ledit rebord 113 et le film 130, pour couler ensuite le long de la ou des parois latérales 111 du récipient 110', ainsi que sur son fond 112. L'étanchéité de l'espace compris entre la face externe 111a, 112a du récipient 110' et la partie du film 130 recouvrant ladite face externe 111a, 112a est donc assurée.

Suite à la cuisson du produit 120 dans le container 110, on procède au pelage du container 110. Dans un premier temps, on tire successivement sur chaque moyen 139 en direction du fond 112 du récipient 110', comme indiqué par les flèches D, de manière à détacher le film 130 du rebord 113 du récipient 110'. Puis on continue de tirer sur chaque moyen 139, de manière que le film 130 ne recouvre plus la ou les parois latérales 111, et le fond 112 du récipient 110' peut être ainsi dépouillé du film 130.

Lors de la cuisson, il s'avère que le récipient 110' n'est pas taché sur sa face externe 111a, 112a, même pour un produit 120 susceptible de donner lieu à des coulures et des projections considérables hors du récipient 110'.

Par conséquent, le récipient 110' pourvu du produit 120 cuit peut être vendu tel quel, sans aucun nettoyage postérieur à la cuisson.

Le container 110 selon l'invention est particulièrement avantageux pour l'industriel agroalimentaire. En effet, il n'implique aucun coût en main d'oeuvre ou en matériel pour son nettoyage, suite à la cuisson du produit 120 qu'il contient. Un tel container 110 offre en outre des garanties de propreté au consommateur, car tout risque de contamination du produit 120 dû à l'élimination de résidus de cuisson sur les parois latérales 111 du récipient 110' ou au remplacement dudit récipient 110' est exclu.

On notera que le film 30, 130 employé pour le container 10, 110 selon l'invention peut être facilement incinéré, du fait de son utilisation unique.

De plus, les containers 10, 110 selon l'invention peuvent être empilés et dépilés dans des conditions similaires à celles concernant les récipients 10' et 110', du fait de la faible épaisseur du film 30, 130 utilisé et du repliement des moyens de pelage 139 à l'extérieur du container 110.

## Revendications

1. Container (10, 110) destiné à recevoir des produits alimentaires (20, 120) en vue de leur cuisson, ledit container (10, 110) étant constitué d'un récipient (10', 110') comprenant au moins une paroi latérale (11, 111) et un fond (12, 112) et d'un moyen de protection (30, 130) de la face externe dudit récipient (10', 110') vis-à-vis des projections issues desdits produits (20, 120) lors de la cuisson, ledit moyen (30, 130) étant monté amovible sur ledit récipient (10', 110'), caractérisé en ce que ledit moyen (30, 130) est constitué d'un film souple en matière plastique dont une partie recouvre la face externe (11a, 111a) de ladite ou chaque paroi latérale (11, 111) dudit récipient (10, 110).

2. Container (10) selon la revendication 1, caractérisé en ce que l'une des faces (30a ou 30b) dudit moyen de protection (30) adhère à l'autre face (30b ou 30a).

3. Container (10) selon la revendication 1, caractérisé en ce que l'une des extrémités dudit moyen de protection (30) est solidaire de son autre extrémité par soudage à chaud.

4. Container (10) selon la revendication 2 ou 3, caractérisé en ce que ledit moyen de protection (30) déborde sur le rebord (11b) de ladite ou desdites parois latérales (11) et/ou sur ledit fond (12).

5. Container (110) selon la revendication 1, caractérisé en ce que ledit film souple (130) est collé sur le rebord (113) de ladite ou desdites parois latérales (111), de manière à rendre étanche auxdites projections l'espace compris entre ladite partie du film (130) et ladite ou chaque paroi latérale (111) que ladite partie recouvre.

6. Container (110) selon la revendication 1, caractérisé en ce que ledit film souple (130) est collé sur le rebord (113) de ladite ou desdites parois latérales (111) et en ce qu'il recouvre le fond (112) dudit récipient (110'), de manière à rendre étanche auxdites projections l'espace compris entre, d'une part, ledit film (130) et, d'autre part, ladite ou chaque paroi latérale (111) et ledit fond (112).

7. Container (110) selon la revendication 5 ou 6, caractérisé en ce que ledit film (130) comporte des moyens de pelage (139) dudit container (110).

8. Container (110) selon la revendication 7, caractérisé en ce que lesdits moyens de pelage (139) sont solidaires dudit rebord (113) et sont respectivement prévus pour être rabattus sur ladite partie du film (130) recouvrant la ou chaque paroi latérale (111).

9. Container (110) selon la revendication 8, caractérisé en ce que lesdits moyens de pelage (139) sont collés sur ladite partie du film (130) recouvrant la ou chaque paroi latérale (111).

10. Container (10, 110) selon l'une des revendications précédentes, caractérisé en ce que le film souple (30, 130) est rétractable à chaud.

11. Container (110) selon l'une des revendications 5 à 10, caractérisé en ce que le film (130) et le récipient (110') sont respectivement constitués de matériaux chimiquement compatibles entre eux.

12. Container (110) selon la revendication 11, caractérisé en ce que le film (130) et le récipient (110') sont respectivement constitués de polyéthylène et de polypropylène.

13. Procédé de conditionnement de produits alimentaires (20) dans un container (10) en vue de leur cuisson, caractérisé en ce qu'il consiste à utiliser un container selon l'une des revendications 1 à 4.

14. Procédé de conditionnement de produits alimentaires (120) dans un container (110) en vue de leur cuisson, caractérisé en ce qu'il consiste à utiliser un récipient (110') comportant une ou plusieurs parois latérales (111), un fond (112) et un rebord (113), à envelopper d'un film souple (130) ledit récipient (110'), les matériaux constituant respectivement ledit récipient (110') et ledit film (130) étant chimiquement compatibles entre eux, à tendre ledit film (130) autour du récipient (110') de telle sorte qu'il soit plaqué étroitement sur ledit rebord (113), à envoyer de l'air chaud sur la partie (138) du film (130) qui recouvre ledit rebord (113) de façon à coller sans apport de matière ladite partie (138) sur ledit rebord (113), et à pratiquer plusieurs incisions sur la partie (137) du film (130) qui recouvre la face d'ouverture (114) du récipient (110'), de manière à obtenir plusieurs moyens de pelage (139) du container (110) qui sont solidaires dudit rebord (113) et qui sont prévus pour être rabattus sur la partie du film (130) qui recouvre la ou chaque paroi latérale (111) du récipient (110').
